# EUROPÄISCHE PATENTSCHRIFT

(11) **EP 0 499 123 B1**
(45) Veröffentlichungstag und Bekanntmachung des Hinweises auf die Patenterteilung: **11.10.1995**
(21) Anmeldenummer: 92101844.6
(22) Anmeldetag: 05.02.1992
(51) Int. Cl.: H02H 7/093, D06F 37/30

(54) **Verfahren zum Schutz gegen überhöhte Antriebsmotordrehzahlen elektronisch gesteuerter Geräte, insbesondere für Haushaltwaschmaschinen und Schaltungsanordnung zur Durchführung des Verfahrens**
Method and circuit overspeed protection of driving motors in electronically controlled devices, particularly in household washing machines
Procédé et circuit pour la protection contre les vitesses de rotation trop élevées d'un moteur dans des appareils à pilotage électronique, en particulier des machines à laver domestiques

(30) Priorität: 13.02.1991 DE 4104272
(43) Veröffentlichungstag der Anmeldung: 19.08.1992
(73) Patentinhaber: Licentia Patent-Verwaltungs-GmbH, 60596 Frankfurt (DE); TELEFUNKEN electronic GmbH, 74072 Heilbronn (DE)
(72) Erfinder: Wipperfürth, Franz-Josef, Ing. grad., W-8501 Cadolzburg (DE); Stahlmann, Harald, W-8501 Ammerndorf (DE); Braun, Werner, Dipl.-Ing. (FH), W-8544 Georgensgmünd (DE); Hennemann, Michael, Dipl.-Ing., W-8079 Böhmfeld (DE); Sedlmeier, Reinhold, Dipl.-Ing., W-8069 Niederlauterbach (DE)
(74) Vertreter: Kuhn, Rudolf, Ing.(grad)

(56) Entgegenhaltungen:
- EP-A- 0 102 659
- EP-A- 0 311 776
- EP-A- 0 362 496
- DE-A- 3 743 396
- US-A- 4 007 409

## Beschreibung

Die Erfindung betrifft ein Verfahren zum Schutz gegen überhöhte Antriebsmotor-Drehzahlen elektronisch gesteuerter Haushaltwaschmaschinen und eine Schaltungsanordnung zur Durchführung des Verfahrens.

Am Markt erhältliche Haushaltwaschmaschinen werden fast durchwegs elektronisch drehzahlgeregelt. Der Antriebsmotor bezieht seinen Laststrom meistens über einen Triac, welcher zur Regelung des Stromflußwinkels von einer Phasenanschnittschaltung angesteuert wird. Bei einem Kurzschluß innerhalb des Triacs (z.B. Durchlegierung der Halbleiterschicht infolge zu hoher Temperaturen) läuft der Antriebsmotor ungehindert hoch, wodurch schwerste Beschädigungen u.a. an der Wäschetrommel, am Laugenbehälter und am Maschinengehäuse selbst entstehen können.

Zur Vermeidung dieser Umstände ist aus der DE-OS 37 43 396 ein "Verfahren und Schaltungsanordnung zum Schutz eines drehzahlgesteuerten Waschmaschinen-Antriebsmotors" bekannt. Verwendet wird hierzu ein Hauptschlußmotor mit geteilter Feldwicklung, der über ein Stator-Anzapfungsrelais auf eine hohe und eine niedrige Drehzahl einstellbar ist. Im Stromkreis des Antriebsmotors liegt vorerwähnter Triac, dessen Steuerelektrode mit dem Ausgang einer Signalbildungsschaltung verbunden ist. Je nach Steuerbefehl wird am Steuereingang des Triacs die Phase des Motorstroms mehr oder weniger stark angeschnitten und die Drehzahl des Motors stufenlos eingestellt. Die Welle des Antriebsmotors ist starr mit einem Tachogenerator verbunden mit dessen Hilfe die "Ist"-Drehzahlen ermittelt werden können. Die "Ist"-Drehzahlen werden nun permanent mit den "Soll"-Drehzahlen bzw. mit einem vorgegebenen Schwellwert verglichen. Bei durchlegiertem Triac, d.h. für den Fall, daß der Motor in seiner Drehzahl nicht mehr regelbar ist, wird nun ein Schwellwert überschritten und das Anzapfungsrelais unmittelbar elektrisch derart verriegelt, daß es nicht mehr in der Lage ist einen Teil der Feldwicklung abzuschalten, beide Feldwicklungen somit dauernd in Reihe liegen und der Motor zwangsweise und ausschließlich mit der geringen Drehzahl läuft.

Der Stand der Technik gestattet nun einen Weiterbetrieb des Gerätes bei defekter Drehzahlelektronik bzw. durchlegiertem Halbleitersteuerelement und erlaubt eine Wäschebehandlung mit einigermaßen brauchbarem Schleuderergebnis. Restrisiken für den Benutzer sind nicht ausgeschlossen, da das Gerät zwar mit drehzahlbegrenztem, jedoch vollkommen ungeregelten Antriebsmotor in Betrieb genommen werden kann.

Die Erfindung hat die Aufgabe einen Kurzschluß im Steuerelement des Antriebsmotors sicher zu erkennen, mit Hilfe einer Zwangsbremsung den Motor zum Stillstand zu bringen und anschließend unmittelbar den Motorstromkreis unter Last zu unterbrechen.

Diese Aufgabe wird gemäß der Erfindung durch die Merkmale des Anspruche 1 und 9 gelöst. Weitere vorteilhafte Ausgestaltungen der Erfindung sind den Unteransprüchen zu entnehmen.

Die durch die Erfindung erzielbaren Vorteile bestehen insbesondere darin, daß im Fall einer fehlerhaften Motoransteuerung eine Sicherheitsroutine in der Art abgearbeitet wird, die das Gerät ohne Beschädigungen und ohne jegliche Gefahr für den Benutzer außer Funktion setzt. Als weiterer Vorteil kann angesehen werden, daß bekannte und vorhandene Bauteile der Analog-bzw. Digital-Technik einsetzbar sind. Die Realisierung der Sicherheitsabfolge kann hierdurch kostengünstig dargestellt werden.

Mehrere Ausführungsbeispiele der Erfindung sind anhand von Diagrammen und Blockschaltbildern dargestellt und werden im folgenden näher beschrieben.

Es zeigen:
Fig. 1 die im Fehlerzustand ablaufende Sicherheitsroutine, dargestellt in Form zeitabhängiger Diagramme,
Fig. 2 das Blockschaltbild zur Realisierung des Sicherheitsablaufs,
Fig. 3 das Blockschaltbild gemäß Fig. 2 in modifizierter Ausführung.

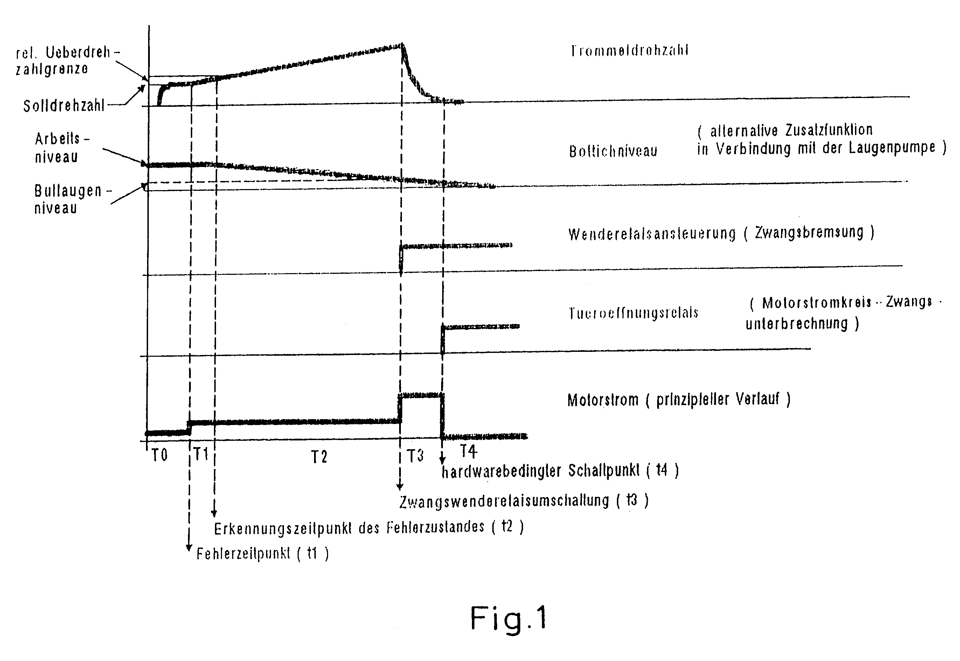

Bei defektem Motorstellglied wird ein Sicherheitsablauf abgearbeitet, der zunächst anhand der Fig. 1 erläutert werde. Hierzu sind von oben nach unten folgende Parameter dargestellt:
die Trommeldrehzahl n in Abhängigkeit von der Zeit,
die Höhe des Waschlaugenniveaus im Bottich in Abhängigkeit von der Zeit,
die Ansteuerung des Antriebsmotor-Wenderelais`um Zeitpunkt t3,
die Ansteuerung des Türöffnungsrelais`zum Zeitpunkt t4 und
den prinzipiellen Verlauf des Motorstroms in Abhängigkeit von der Zeit.

Die Zeitspanne T0 veranschaulicht den Normalbetrieb: Die Trommel läuft mit "Soll"-Drehzahl, die Waschlaugenmenge besitzt ihr Arbeitsniveau, der Wendeschalter ist gemäß dem Arbeitsdrehsinn des Antriebsmotors geschaltet, das Türöffnungsrelais für die Motorstromunterbrechung und zur Freigabe des Türöffnungsschaltkreises befindet sich in Ruhelage und die Motorstromaufnahme entspricht dem Nennwert.

Zum Zeitpunkt t1, dem Fehlerzeitpunkt, erfolge ein Durchlegieren des elektronischen Steuerelements, so daß Antriebsmotor und Wäschetrommel ungeregelt über die "Soll"-Drehzahl hinaus hochlaufen. Am Ende der Zeitspanne T1, dem Erkennungszeitpunkt t2 des Fehlerzustands wird von der Drehzahlüberwachungseinheit besagtes Hochlaufen erkannt bzw. eine unzulässige Drehzahlerhöhung oder das Überschreiten der relativen Überdrehzahlgrenze registriert. Zweckmäßigerweise wird der Zeitspanne T1 bis zum Erkennungszeitpunkt t2 eine sogenannte "Entprellzeit" eingefügt. Sie beinhaltet eine zusätzliche Sicherheitsspanne, innerhalb welcher die relative Überdrehzahlgrenze ständig erreicht bzw. sogar überschritten werden muß. Dies dient der störsicheren Fehlererkennung und klammert kurzzeitige, betriebsbedingte Drehzahlspitzen, wie Schleudereinschwingvorgänge oder dergleichen aus. Zugleich wird zum Fehlerzustandserkennungszeitpunkt t2 die momentane Höhe des Waschlaugenniveaus abgefragt und während der Zeitspanne T2 vom Arbeitsniveau bis unterhalb Bullaugenniveau (Türunterkante) abgepumpt. Am Ende der Zeitspanne T2, zum Zeitpunkt t3 wird das Unterschreiten des Bullaugenniveaus erkannt und der volldrehende Antriebsmotor durch Ansteuerung eines Wendeschalters in die inverse Drehrichtung (d.h. immer entgegengesetzt zur momentanen Schaltlage) geschaltet. Jetzt wird der Antriebsmotor schlagartig in Gegendrehrichtung bestromt und die Wäschetrommel abrupt zwangsgebremst. Während der Zeitspanne T3, dem Abbremsvorgang, erfolgt jetzt das völlige Abpumpen der Waschlauge bis unter Laugenbottichunterkante. Jetzt ist gewährleistet, daß beim öffnen der Tür ein Auslaufen der Lauge- und somit ein Wasserschaden verhindert wird. Am Ende der Zeitspanne T3, dem hardwarebedingten Schaltpunkt t4 wird der erzwungene Trommelstillstand erkannt und bevor der Antriebsmotor in inverser Drehrichtung wiederum hochläuft ein vom defekten Motorstellglied unabhängiges Türöffnungsrelais, ausgebildet als einpoliges Umschaltrelais, erregt und aus seiner Ruhestellung (Antriebsmotor bestromt) in Arbeitsstellung (Antriebsmotor unbestromt) gebracht und der Motorstromkreis endgültig unterbrochen. Bei defektem Stellglied verbleibt besagtes Umschaltrelais permanent in Arbeitsstellung, so daß dem Benutzer eine Wiederinbetriebnahme des defekten Gerätes nicht möglich ist. Erst bei Trommelstillstand und permanent unterbrochenem Motorstromkreis kann die Tür geöffnet werden. Wurde jedoch vor Eintritt der Betriebsstörung ein programmgemäßes Abpumpen vorgenommen, wird ein solcher Zustand erkannt und bereits zum Zeitpunkt t2 die zuvor geschilderte Drehrichtungsumkehr und Abbremsung erzwungen.

Die für den Ablauf der Sicherheitsroutine erforderlichen Zeitspannen T1, T2 und T3 können nun als feste Werte eingestellt werden. Sie können ebenso programmabhängig, funktionsabhängig oder drehzahlabhängig vorgegeben werden. D.h. mit anderen Worten: Je nachdem zu welchem Programmzeitpunkt (bei allen vom Benutzer anwählbaren Waschprogrammen) und momentaner, programmbedingter Drehzahlhöhe ein Fehler im Motoransteuerungselement eintritt, kann die Dauer besagter Zeitspannen T1, T2, 73 variabel ablaufen.

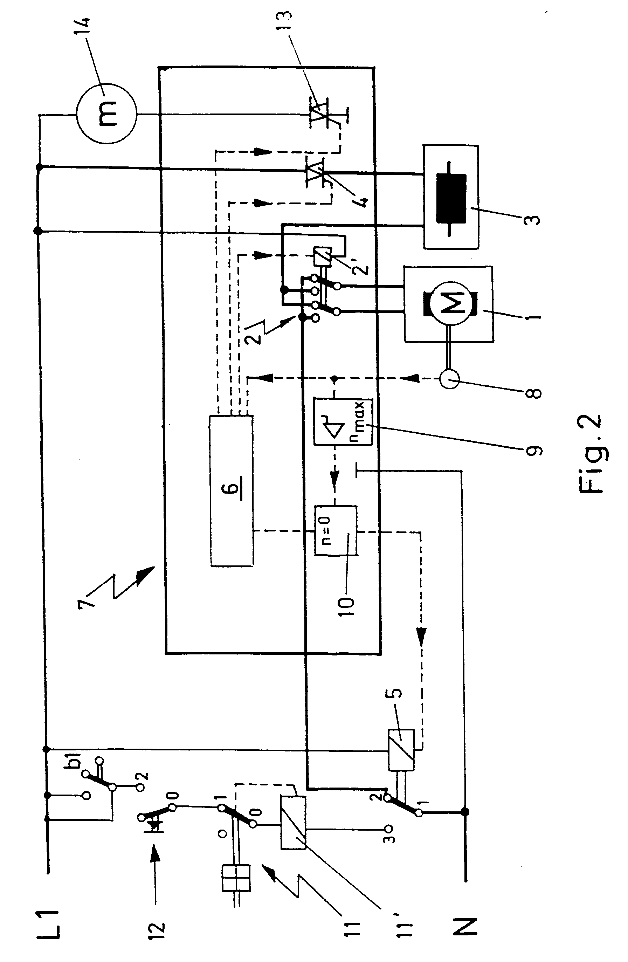

Eine prinzipielle Schaltungsanordnung zur Realisierung des zuvor geschilderten Sicherheitsablaufes veranschaulicht Fig. 2. Der Antriebsmotor 1 liegt über einen Drehrichtungsumkehr-bzw. Wendeschalter 2, seiner Feldwicklung 3 und einem Leistungs-Halbleitersteuerelement, dem Triac 4 in Reihe an den Netzanschlußpunkten L1,N . Zugleich ist dem Wendeschalter 2 direkt der Öffnungskontakt (in Ruhelage ist die Kontaktverbindung 1-2 hergestellt) eines einpoligen Umschaltrelais 5 vorgeschaltet. ( In Fig. 1 als Türöffnungsrelais bezeichnet). Die Ansteuerung vorgenannten Triacs 4 und damit die Drehzahlregelung des Antriebsmotors 1 übernimmt der Prozessor 6, welcher Bestandteil einer digitalen Drehzahlregelung bzw. einer Steuerungselektronik 7 ist. An die Welle des Antriebsmotors 1 ist ein Tachogenerator 8 starr angekoppelt, welcher permanent die "Ist"-Drehzahl in Form von Wechselspannungsimpulsen erfaßt und dem Prozessor 6 übermittelt. Mit Hilfe einer Auswerteschaltung wird besagte "Ist"-Drehzahl nun laufend mit einem vorgegebenen Drehzahl-"Sollwert" verglichen und somit ständig überwacht. Dieser vorgegebene Drehzal-"Sollwert" kann nun ein fester Wert (zulässiger Maximalendwert) oder ein relativer Wert (maximal zulässige Drehzahlerhöhung=maximaler Differenzendwert) sein. Beide Kriterien werden nun in Abhängigkeit aktueller, dem momentan ablaufenden Waschprogrammschritt entsprechenden "Soll"-Drehzahlen laufend geändert bzw. angepaßt.

D.h. mit anderen Worten: Ein Waschprogramm enthält eine Mehrzahl verschiedener "Soll"-Drehzahlen und zeitabhängiger Drehzahlfunktionen wie beispielsweise Waschgang-Drehzahl (Reversierzyklen), Zwischenspülen-Drehzahl, vor dem Schleudern den sogenannten Sanftanlauf-Drehzahlanstieg mit anschließender Reduzierung auf Wäscheentwässerungs- und Unwuchterkennungs-Drehzahl, Schaumerkennungsschleuder-Hochlaufprofil (mit einer Vielzahl von Drehzahlerhöhungen in kleinsten Schritten) und dergleichen mehr. (Den Waschprogrammen entsprechende Drehzahl-Kurvenverläufe in Abhängigkeit von der Zeit werden von allen Haushaltgeräteherstellern separat entwickelt und sind deshalb von Fabrikat zu Fabrikat verschieden. Sie sind meist aus den jeweiligen Werbemitteln ersichtlich. Zum Beispiel AEG-Prospekt 1989 "Waschautomaten, Trockner, Schleudern"-Seite 7).

Zusammengefaßt kann gesagt werden: Beim erfindungsgemäßen Verfahren erfolgt nicht nur die ausschließliche Überwachung eines einzigen limitierten maximalen Drehzahlwertes sondern eine umfassende Kontrolle des kompletten Drehzahlprofils oder Verlaufs und zu jedem Zeitpunkt eines vollständigen Waschgangs. D.h. werden nun zu irgendeinem Programmzeitpunkt dessen momentane Kriterien erreicht bzw. überschritten läuft die gemäß Fig. 1 geschilderte Sicherheitsfunktion ab. Sie ist in die Steuerungsselektronik 7 logisch einprogrammiert und zusätzlich fest verdrahtet. Wobei, wie unter Fig. 1 erwähnt, auch eine variable Gestaltung der Zeitspannen T1, T2 und T3 für den Ablauf besagter Sicherheitsroutinen mit einbezogen wird. Zuvor gesagtes gilt für sämtliche vom Benutzer anwählbaren Waschprogramme und deren über Eingabetasten einstellbaren Sonderfunktionen. Der Zweck dieser Maßnahme liegt darin, daß eine programmbedingt langsam drehende Trommel bei Eintritt eines Fehlers nicht erst auf eine sehr hohe Drehzahl hochläuft ehe die Sicherheitsroutine anspricht. Unnötige, mechanische Maschinenbelastungen werden hierdurch vermieden. (Bei Vorgabe eines einzigen, programmunabhängigen Maximalwertes wäre ein Hochlauf über die maximale Schleuder-"Soll"-Drehzahl erforderlich.)

Die fest verdrahtete Logik besteht aus einem ersten Komparator 9, der (zusätzlich zum Prozessor 6) die laufende Überwachung der momentanen Drehzahlkriterien übernimmt. Bei Erreichen bzw. Überschreiten derselben veranlaßt der Komparator 9 den Prozessor 6 der Steuerungselektronik 7 den Wendeschalter 2 umzupolen. Dies geschieht durch Ansteuerung der Spule des Wendeumschaltrelais 2′. Gleichzeitig wird ein zweiter Komparator 10 aktiviert, der den Trommelstillstand am Schluß der Zwangsabbremsung des Antriebsmotors 1 erkennt und das einpolige Ümschaltrelais 5 an Spannung legt, worauf dessen Kontakt aus seiner Ruhelage 1-2 in die Arbeitslage 1-3 gebracht wird und den Motorstromkreis unterbricht. Den Motorstillstand erkennt auch der Prozessor 6 (infolge ausbleibender Tachoimpulse). Der zweite Komparator 10, der beispielsweise aus einer fest verdrahteten Spannungsvergleichsschaltung besteht und über entsprechende Ausgangsgrößen zusätzlich den Stillstand erfaßt, ist aus Sicherheitsgründen vorgesehen und dient der exakten Erfassung des äußerst wichtigen, hardwarebedingten Schaltpunkts t4 (Fig. 1), welcher im Fehlerfall jegliches Risiko für den Benutzer ausschließt.

Der Zustand "maximal zulässige Drehzahl überschritten" bzw. "Triac 4 defekt" oder ganz allgemein "Trommel zwangsgebremst" wird gespeichert, woraufhin das Umschaltrelais 5 permanent und bis zur Behebung des Schadens mit Spannung versorgt wird und in Arbeitslage verbleibt, so daß (wie schon erwähnt) der Benutzer außer Stande ist das schadhafte Gerät erneut in Betrieb zu nehmen.

Die Arbeitskontaktlage 1-3 des Umschaltrelais 5 aktiviert zugleich den elektrischen Türöffnungs-Schaltkreis. Der elektrische Türöffnungs-Schaltkreis besteht aus besagter Umschaltrelais-Arbeitskontaktlage 1-3, dem eigentlichen elektromechanisch betätigbaren Türschloßschalter 11, dessen Aus-Kontakt 0-1 und wird vom Benutzer mit Hilfe der elektrischen Türtaste 12 (ausgebildet als Schließkontakt 0-2) kurzzeitig an die Netzanschlußpunkte L1,N gelegt. Der Programmeinschaltkontakt b1 kommt in diesem Fall nicht zum Tragen, dessen Bedeutung wird weiter unten erläutert. Die Antriebsspule 11′ des elektromechanischen Türschloßschalters 11 betätigt ihren Ausschaltkontakt 0-1, unterbricht sich selbst, entriegelt die Tür und verbleibt in elektrischer Ausstellung. Erst nach dem Schließen der Tür wird der Türschloßschalter 11 mechanisch wiederum in die gezeichnete Lage gebracht.

Besitzen nun Geräte elektronisch angesteuerte mechanische Programmschaltwerke kann die Trommel-bzw. Motor-Zwangsbremsung entfallen, falls die Türöffnung nur während bestimmter Schaltwerksschritte möglich ist. Die Sicherheitsroutine wird nun dahingehend abgeändert, daß bei unzulässiger Maximal-Drehzahlerkennung und nach erforderlichem Laugenabpumpen das Umschaltrelais 5 den Motorstromkreis unmittelbar unterbricht und wie zuvor geschildert den Türöffnungsschaltkreis freigibt. Eine Drehrichtungsumpolung des Antriebsmotors 1 unterbleibt im Fehlerfall, d. h. die Trommel läuft selbsttätig bis zum Stillstand aus. Der Benutzer ist jedoch nicht in der Lage, vor Trommelstillstand die Tür zu öffnen.

Gemäß Fig. 2 läuft nun der Waschgang mit Hilfe des vom Prozessor 6 über das elektronische Stellglied 13 angesteuerten Antriebsmotor 14 eines mechanischen Programmschaltwerks ab. Der Türöffnungsschaltkreis ist jetzt über den programmangesteuerten Einschaltkontakt b1 geöffnet (dessen Überbrückung entfällt). Erst wenn mit Hilfe des Prozessors 6 bzw. des zweiten Komparators 10 ein Trommelstillstand erkannt wurde, veranlaßt der Prozessor 6 über den Programmschaltwerk-Antriebsmotor 14 den Einschaltkontakt b1 zu schließen. Jetzt kann mit Hilfe des Türtasters 12 der Türschloßschalter 11 entriegelt werden.

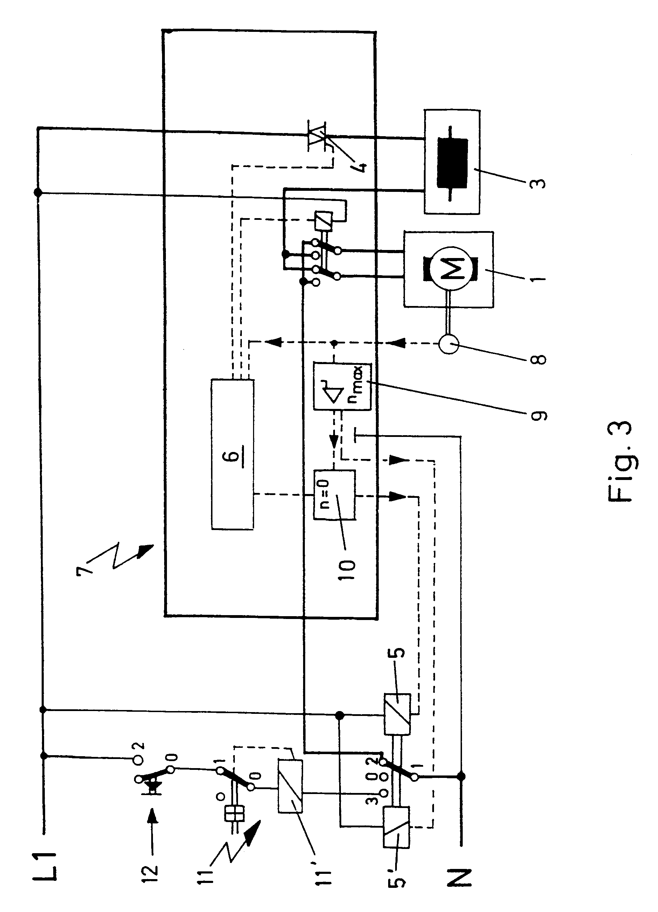

Ein weiteres Beispiel für den Ablauf der Sicherheitsroutine ohne Motorzwangsbremsung veranschaulicht Fig. 3. Hierbei ist das den Motorstromkreis unterbrechende Umschaltrelais als Zwei-Spulenrelais 5, 5′ ausgeführt. Bei unzulässig hoher Drehzahlerkennung durch den ersten Komparator 9 schaltet die erste Spule 5′ von der Kontaktlage 1-2 zunächst in die motorstroumunterbrechende Kontaktzwischenlage 1-0 so daß der Türstromkreis vorerst noch nicht freigegeben ist. Erst nach erkanntem Trommelstillstandsauslauf steuert der zweite Komparator 10 die zweite Spule 5 an, welche ihrerseits von der Kontaktlage 1-0 in die Kontaktlage 1-3 schaltet, den Türstromkreis freigibt und bei schadhaftem Gerät, wie zuvor geschildert, in dieser Lage verbleibt.

In einer letzten Ausführungsvariante kann im Fehlerfall als Kriterium und zur Einleitung des Sicherheitsablaufs anstatt überhöhter Drehzahlen der zeitliche Verlauf des Motorstroms herangezogen werden. Wie aus Fig. 1 ersichtlich ist, erhöht sich zum Fehlerzeitpunkt t1 der Motorstrom. Anstelle eines kompletten Waschprogramm-Drehzahlprofils kann ein komplettes Waschprogramm-Motorstrom-"Sollprofil" permanent überwacht werden und so bei unzulässigen Abweichungen zu jedem Zeitpunkt besagte Sicherheitsroutine automatisch abgearbeitet werden.

Das erfindungsgemäße Sicherheitsüberwachungsverfahren ist neben Haushaltswaschmaschinen auch für alle Geräte mit motorisch angetriebenen Wäschetrommeln mit Einfüllöffnungstüren, also auch für Haushaltwäschetrockner anwendbar.

## Patentansprüche

1. Verfahren zum Schutz gegen überhöhte Antriebsmotor-Drehzahlen elektronisch gesteuerter Haushaltwaschmaschinen bei welchen die ordnungsgemäße Funktion eines Motorsteuerung-Triacs (4) mit Hilfe von Tachosignalen (8) über einen Mikroprozessor (6) und gleichzeitig über zwei verdrahtete und in Reihe geschaltete Komparatoren (9, 10) bezüglich eines Drehzahl- "Ist"-"Soll"-Vergleichs überwacht wird und im Fall einer Überschreitung der "Soll"-Drehzahl bzw. eines maximalen Drehzahlendwerts oder bei Erreichen einer limitierten, relativen Drehzahldifferenz bzw. einem Drehzahldifferenzendwert ein Sicherheitsablauf abgearbeitet wird, gekennzeichnet durch folgende Merkmale:
a) daß die Höhe des Laugenniveaus im Bottich abgefragt und falls erforderlich nach einer ersten Zeitspanne (T1) bzw. ab einem Erkennungszeitpunkt (t2) des Fehlerzustands innerhalb einer zweiten Zeitspanne (T2) vom Arbeitsniveau auf Bullaugenniveau abgepumpt wird,
b) daß am Ende der zweiten Zeitspanne (T2) zu einem weiteren Zeitpunkt (t3) bzw. nach Unterschreitung des Bullaugenniveaus der Antriebsmotor (1) in seiner Drehrichtung durch einen Wendeschalter (2) und unter Vollast umgepolt wird,
c) daß während der Umpolung und bis zum Trommelstillstand (t4), innerhalb einer dritten Zeitspanne (T3), der Laugenbottich völlig leergepumpt wird,
d) daß am Ende der dritten Zeitspanne (T3), zum Schaltpunkt (t4) des Trommelstillstands der Motorstromkreis unter Last unterbrochen wird,
e) daß nach Unterbrechung des Motorstromkreises ein elektrischer Türöffnungsschaltkreis (11, 11′, 12, 0-2) an Spannung gelegt wird und,
f) daß der an Spannung liegende Türöffnungsschaltkreis nur während bestimmter Programmschaltwerksschritte geschlossen wird.

2. Verfahren nach Anspruch 1, dadurch gekennzeichnet, daß bei bereits programmmäßig leergepumptem Bottich, am Ende der ersten Zeitspanne (T1), zum Erkennungszeitpunkt (t2) des Fehlerzustands der Antriebsmotor (1) umgepolt wird.

3. Verfahren nach Anspruch 1, dadurch gekennzeichnet, daß die drei genannten, den Sicherheitsablauf bestimmenden Zeitspannen (T1,T2,T3) als Festwerte vorgegeben werden.

4. Verfahren nach Anspruch 1, dadurch gekennzeichnet, daß die drei genannten Zeitspannen (T1,T2,T3) als programmabhängige variable Werte vorgegeben werden.

5. Verfahren nach Anspruch 1, dadurch gekennzeichnet, daß die drei genannten Zeitspannen (T1,T2,T3) als funktionsabhängige Variable vorgegeben werden.

6. Verfahren nach Anspruch 1, dadurch gekennzeichnet, daß die drei genannten Zeitspannen (T1,T2,T3) als drehzahlabhängige variable Werte vorgegeben werden.

7. Verfahren nach Anspruch 1, dadurch gekennzeichnet, daß der für die Triacüberwachung maßgebliche maximale Drehzahlendwert bzw. der maximale relative Drehzahl-Differenzendwert zu jedem Zeitpunkt des Drehzahl-"Sollverlaufs" bzw. zu jedem Zeitpunkt des kompletten Drehzahl-"Sollprofils" während eines kompletten Waschprogramms dem momentan vorliegenden Drehzahl-"Sollwert" ständig angepaßt wird.

8. Verfahren nach Anspruch 1, dadurch gekennzeichnet, daß für die Triacüberwachung bzw. zur Einleitung des Sicherheitsablaufs ein anormaler Verlauf des Antriebsmotorstroms zugrundegelegt wird.

9. Schaltungsanordnung zur Durchführung eines Verfahrens zum Schutz gegen überhöhte Antriebsmotor-Drehzahlen elektronisch gesteuerter Haushaltwaschmaschinen nach Anspruch 1, bei welchen die ordnungsgemäße Funktion eines Motorsteuerung-Triacs (4) mit Hilfe von Tachosignalen (8) über einen Mikroprozessor (6) und gleichzeitig über einen ersten Komparator (9) und einem zweiten Komparator (10), die verdrahtet und in Reihe geschaltet sind, (9, 10) bezüglich eines Drehzahl-"Ist"-"Soll"-Vergleichs überwacht wird und im Fall einer Überschreitung der "Soll"-Drehzahl bzw. eines maximalen Drehzahlendwerts oder bei Erreichen einer limitierten, relativen Drehzahldifferenz bzw. einem Drehzahldifferenzendwert ein Sicherheitsablauf abgearbeitet wird, gekennzeichnet durch folgende Merkmale:
a) daß in Reihe zu einem Wendeschalter (2) des Antriebsmotors (1) ein öffnungskontakt (1-2) eines einpoligen Umschaltrelais (5) geschaltet ist,
b) daß mit Hilfe des ersten Komparators (9) der zweite Komparator (10) aktivierbar ist,
c) daß nach Ansteuerung des Wendeschalters (2) und bei erkanntem Trommelstillstand das Umschaltrelais (5) durch den zweiten Komparator (10) ansteuerbar ist,
d) daß nach Ansteuerung des Umschaltrelais (5) aus seiner Kontaktruhelage (1-2) in seine
Kontaktarbeitslage (1-3) ein elektrischer Türöffnungsschaltkreis, bestehend aus einem elektromechanischen Türschloßschalter (11) mit Antriebsspule (11′) und einem hierzu in Reihe liegenden Türtaster (12) mit Ein-Kontakt (0-2), an Spannung legbar ist,
e) daß in Reihe zum Türtaster (12) ein programmbetätigbarer Ein-Kontakt (bl) schaltbar ist.

10. Schaltungsanordnung nach Anspruch 9, dadurch gekennzeichnet, daß das Umschaltrelais (5) als zweispuliges Relais (5,5′) mit einer ersten, einer zweiten und einer dritten Kontaktschaltlage (1-2, 1-0, 1-3) ausgeführt ist.

11. Schaltungsanordnung nach den Ansprüchen 9 oder 10, dadurch gekennzeichnet, daß mit Hilfe des ersten Komparators (9) die erste Spule (5′) des zweispuligen Relais (5,5′) und somit von der ersten Kontaktschaltlage (1-2) in die zweite Kontaktschaltlage (1-0) schaltbar ist.

12. Schaltungsanordnung nach den Ansprüchen 9 oder 10, dadurch gekennzeichnet, daß mit Hilfe des Komparators (10) die zweite Spule (5) des zweispuligen Relais (5,5′) und somit von der zweiten Kontaktschaltlage (1-0) in die dritte Kontaktschaltlage (1-3) schaltbar ist.

## Claims

1. Method of protecting against excessive drive motor speeds in electronically controlled domestic washing machines, wherein the correct functioning of a motor control triac (4) is monitored by means of tachometric signals (8) via a microprocessor (6) and simultaneously a "reference" to "actual" speed comparison is carried out via two wired comparators (9, 10) connected in series, and if the "reference" speed or a maximum final speed is exceeded or a limited relative speed differential or a final speed differential is reached, a safety sequence is followed, characterised by the following features:
a) the height of the washing liquid in the tub is interrogated and if necessary, after a first time interval (T1) or starting from a moment (t2) of detection of the fault, within a second time interval (T2) the liquid is pumped away from operating level to bullseye level,
b) at the end of the second time interval (T2) at a further instant (t3) or after the liquid has sunk below the bullseye level the polarities, and hence the direction of rotation, of the drive motor (1) are reversed by a reversing switch (2) under full load,
c) during the pole reversal and until the drum becomes stationary (t4), within a third time interval (T3), the washing liquid tub is pumped completely empty,
d) at the end of the third time interval (T3) at the switching point (t4) of drum standstill the motor circuit is interrupted under load,
e) after the motor circuit has been interrupted, voltage is applied to an electric door-opening circuit (11, 11′, 12, 0-2),
f) the door-opening circuit to which a voltage has been applied is only closed during specified programme switching stages.

2. Method according to claim 1, characterised in that when the tub has already been pumped empty as programmed, at the end of the first time interval (T1), at the instant (t2) of detection of the fault, the polarities of the drive motor (1) are reversed.

3. Method according to claim 1, characterised in that the three time intervals (T1, T2, T3) determining the safety sequence are specified as fixed values.

4. Method according to claim 1, characterised in that the three time intervals (T1, T2, T3) are specified as programme-dependent variables.

5. Method according to claim 1, characterised in that the three time intervals (T1, T2, T3) are specified as function-dependent variables.

6. Method according to claim 1, characterised in that the three time intervals (T1, T2, T3) are specified as speed-dependent variables.

7. Method according to claim 1, characterised in that the maximum final speed or the maximum relative speed differential governing triac monitoring at any instant in the "reference" speed curve or at any instant in the complete "reference" speed profile during a full wash programme is constantly adapted to the "actual" speed prevailing at that moment.

8. Method according to claim 1, characterised in that for triac monitoring or in order to start the safety sequence, an abnormal curve of the drive motor current is used as a basis.

9. Circuit arrangement for carrying out a method for protecting against excessive drive-motor speeds in electronically controlled domestic washing machines according to claim 1, wherein the correct functioning of a motor control triac (4) is monitored by means of tachometric signals (8) via a microprocessor (6) and simultaneously a "reference" to "actual" speed comparison is carried out via a first comparator (9) and a second comparator (10) which are wired and connected in series, and if the "reference" speed or a maximum final speed is exceeded or a limited relative speed differential or a final speed differential is reached, a safety sequence is followed, characterised by the following features:
a) in sequence to a reversing switch (2) of the drive motor (1) an opening contact (1-2) of a single-pole u relay (5) is connected,
b) the second comparator (10) is actuatable by means of the first comparator (9),
c) after the reversing switch (2) has been actuated and when the drum is known to be stationary, the changeover relay (5) can be set by the second comparator (10),
d) after the changeover relay (5) has been switched out of its contact rest position (1-2) into its contact operating position (1-3), a voltage is applied to an electric door-opening circuit, consisting of an electromagnetic door lock switch (11) with a drive coil (11′) and door sensors (12) in series therewith and comprising a single contact (0-2),
e) a programme-actuatable single contact (b1) is connectable in series with the door sensor (12).

10. Circuit arrangement according to claim 9, characterised in that the changeover relay (5) takes the form of a two-coil relay (5, 5′) with contact switching positions (1-2, 1-0, 1-3).

11. Circuit arrangement according to claims 9 or 10, characterised in that the first coil (5′) of the two-coil relay (5, 5′) is switchable by means of the first comparator (9), and therefore from the first contact switching position (1-2) into the second contact switching position (1-0).

12. Circuit arrangement according to claim 9 or 10, characterised in that the second coil (5) of the two-coil relay (5, 5′) is switchable by means of the comparator (10), and therefore from the second contact position (1-0) into the third contact switching position (1-3).

## Revendications

1. Procédé de protection contre les vitesses de rotation trop élevées du moteur d'entraînement de machines à laver domestiques à commande électronique, dans lesquelles la fonction correcte d'un triac (4) de commande de moteur est contrôlée à l'aide de signaux tachymétriques (8) au moyen d'un microprocesseur (6) et en même temps au moyen de deux comparateurs (9, 10) câblés et montés en série, par une comparaison entre la vitesse "réelle" et la vitesse de "consigne", et en cas de dépassement de la vitesse de "consigne" ou d'une valeur maximale de la vitesse de rotation ou dans le cas où est atteinte une différence de vitesse relative limitée ou une valeur différentielle finale de vitesses, une procédure de sécurité se déroule, caractérisé par les caractéristiques suivantes :
a) la hauteur du niveau de lessive dans la cuve est interrogée et en cas de nécessité, après un premier intervalle de temps (t1) ou à partir d'un instant de détection (t2) de l'état de défaut à l'intérieur d'un deuxième intervalle de temps (T2) est pompée du niveau de travail au niveau du hublot,
b) à la fin du deuxième intervalle de temps (T2) à un autre instant (t3) ou après passage au-dessous du niveau du hublot, le moteur d'entraînement (1) est inversé dans son sens de rotation par un inverseur (2) et sous pleine charge,
c) pendant l'inversion des pôles et jusqu'à l'arrêt du tambour, la cuve à lessive est totalement vidangée pendant un troisième intervalle de temps (T3),
d) à la fin du troisième intervalle de temps (T3), à l'instant de manoeuvre (t4) de l'arrêt du tambour, le circuit du moteur est interrompu sous charge,
e) après interruption du circuit électrique du moteur un circuit électrique d'ouverture de porte (11, 11′, 12, 0-2) est mis sous tension et
f) le circuit d'ouverture de porte mis sous tension n'est fermé que pendant des pas déterminés du programmateur.

2. Procédé selon la revendication 1, caractérisé en ce que dans le cas où la cuve est déjà vidangée conformément au programme, le moteur d'entraînement (1) est inversé à la fin du premier intervalle de temps (T1), à l'instant de détection (t2) de l'état de défaut.

3. Procédé selon la revendication 1, caractérisé en ce que les trois intervalles de temps cités (T1, T2, T3), déterminant la procédure de sécurité, sont donnés comme valeurs fixes.

4. Procédé selon la revendication 1, caractérisé en ce que les trois intervalles de temps cités (T1, T2, T3) sont donnés comme des valeurs variables dépendant du programme.

5. Procédé selon la revendication 1, caractérisé en ce que les trois intervalles de temps cités (T1, T2, T3) sont donnés comme des variables dépendant de la fonction.

6. Procédé selon la revendication 1, caractérisé en ce que les trois intervalles de temps cités (T1, T2, T3) sont donnés comme des valeurs variables dépendant de la vitesse de rotation.

7. Procédé selon la revendication 1, caractérisé en ce que la valeur finale maximale de la vitesse de rotation, déterminante pour le contrôle du triac ou la valeur différentielle finale relative maximale de la vitesse de rotation est adaptée en permanence à chaque instant de la "courbe de consigne" de la vitesse de rotation ou à chaque instant du "profil de consigne" complet de la vitesse de rotation, pendant un programme de lavage complet, à la "valeur de consigne" momentanée de la vitesse de rotation.

8. Procédé selon la revendication 1, caractérisé en ce que pour le contrôle du triac ou pour amorcer la procédure de sécurité, on prend pour base une variation anormale du courant du moteur d'entraînement.

9. Circuit pour la mise en oeuvre d'un procédé de protection contre les vitesses de rotation trop élevées du moteur d'entraînement de machines à laver domestiques à commande électronique selon la revendication 1, dans lesquelles la fonction correcte d'un triac (4) de commande de moteur est contrôlée à l'aide de signaux tachymétriques (8) au moyen d'un microprocesseur (6) et en même temps au moyen d'un premier comparateur (9) et d'un deuxième comparateur (10) qui sont câblés et montés en série, par une comparaison entre la vitesse "réelle" et la vitesse de "consigne", et en cas de dépassement de la vitesse de "consigne" ou d'une valeur maximale de la vitesse de rotation ou dans le cas où est atteinte une différence de vitesse relative limitée ou une valeur finale de différentes vitesses, une procédure de sécurité se déroule :
a) un contact d'ouverture (1-2) d'un relais de commutation (5) unipolaire est monté en série avec un inverseur (2) du moteur d'entraînement (1),
b) le deuxième comparateur (10) est activable au moyen du premier comparateur (9),
c) après commande de l'inverseur (2) et lorsque l'arrêt du tambour est détecté, le relais de commutation (5) peut être commandé par le deuxième comparateur (10),
d) après commande du relais de commutation (5) à partir de sa position de repos de contact (1-2) dans sa position de travail de contact (1-3), un circuit électrique d'ouverture de porte, constitué d'un interrupteur de serrure de porte électromécanique (11) avec bobine d'entraînement (11′) et un bouton de porte (12) monté en série avec celui-ci, avec contact marche (0-2), peut être mis sous tension,
e) un contact marche (b1) actionnable par le programme peut être monté en série avec le bouton de porte (12).

10. Circuit selon la revendication 9, caractérisé en ce que le relais de commutation (5) est un relais (5, 5′) à deux bobines avec une première, une deuxième et une troisième positions de commutation de contacts (1-2, 1-0, 1-3).

11. Circuit selon les revendications 9 ou 10, caractérisé en ce qu'à l'aide du premier comparateur (9), la première bobine (5) du relais (5, 5′) à deux bobines peut être commandée, et donc de la première position de contacts (1-2) dans la deuxième position de contacts (1-0).

12. Circuit selon les revendications 9 ou 10, caractérisé en ce qu'à l'aide du comparateur (10), la deuxième bobine (5) du relais (5, 5′) à deux bobines peut être commandée, et donc de la deuxième position de contacts (1-0) dans la troisième position de contacts (1-3).
